(19)

Europäisches
Patentamt
European
Patent Office
Office européen
des brevets

(11)  **EP 3 493 081 A1**

(12)  # EUROPEAN PATENT APPLICATION

(43) Date of publication:
**05.06.2019 Bulletin 2019/23**

(51) Int Cl.:
**G06F 17/27** *(2006.01)*    **G06F 16/35** *(2019.01)*

(21) Application number: **18206188.7**

(22) Date of filing: **14.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2017 IN 201721042505**

(71) Applicant: **Tata Consultancy Services Limited Maharashtra (IN)**

(72) Inventors:
• **VIG, Lovekesh**
  **122003 Gurgaon - Haryana (IN)**
• **YADAV, Mohit**
  **122003 Gurgaon - Haryana (IN)**
• **SUNDER, Vishal**
  **122003 Gurgaon - Haryana (IN)**
• **SHROFF, Gautam**
  **122003 Gurgaon - Haryana (IN)**

(74) Representative: **Goddar, Heinz J.**
**Boehmert & Boehmert**
**Anwaltspartnerschaft mbB**
**Pettenkoferstrasse 22**
**80336 München (DE)**

(54)  **SYSTEMS AND METHODS FOR SEGMENTING INTERACTIVE SESSION TEXT**

(57)    Text segmentation has a long history going back to few of the earliest attempts. However, segmenting informal text has resulted in information loss with less accuracy. Embodiments of the present disclosure provide systems and methods for segmenting interactive session text that includes a plurality of input text posts using the information bottleneck method, augmented with sequential continuity constraints. Furthermore, the present disclosure and its embodiments utilize critical non-textual clues such as time between two consecutive posts and people mentions within the posts to reduce information loss. Using the fusion of all textual and non-textual information from the input text posts in the proposed information bottleneck approach for text segmentation allows to exploit non-textual information collectively with the text involved in the conversations to achieve better segmentation.

FIG. 2

**Description**

CROSS-REFERENCE TO RELATED APPLICATIONS AND PRIORITY

The present application claims priority to Indian complete specification titled "SYSTEMS AND METHODS FOR SEGMENTING INTERACTIVE SESSION TEXT" Application No. 201721042505, filed in India on November 27, 2017.

TECHNICAL FIELD

The disclosure herein generally relate to text segmentation techniques, and, more particularly, to systems and methods for segmenting interactive session text.

BACKGROUND

The prolific upsurge in the amount of chat conversations has notably influenced the way people wield languages for conversations. Moreover, conversation platforms have now become prevalent for both personal and professional usage. For instance, in a large enterprise scenario, project managers can utilize these platforms for various tasks such as decision auditing and dynamic responsibility allocation. Logs of such conversations offer potentially valuable information for various other applications such as automatic assessment of possible collaborative work among people.

It is thus vital for effective segmentation methods that can separate discussions into small granules of independent conversational snippets. By 'independent', it is meant that a segment should as much as possible be self-contained and discussing the same topic, such that a segment can be suggested if any similar conversation occurs again. As an outcome of this, various short text similarity methods can be employed directly. Segmentation can also potentially act as an empowering preprocessing step for various down-streaming tasks such as automatic summarization, text generation, information extraction, and conversation visualization. It is worth noting that chat segmentation presents a number of grueling challenges such as, the informal nature of the text, the frequently short length of the posts and a significant proportion of irrelevant interspersed text.

Research in text segmentation has a long history going back to the earliest attempts. Since then many methods, including but not limited to, Texttiling, representation learning based on semantic embeddings, and topic models have been presented. Albeit, very little research effort has been proposed for segmenting informal chat text but has resulted in information loss with less accuracy.

SUMMARY

Embodiments of the present disclosure present technological improvements as solutions to one or more of the above-mentioned technical problems recognized by the inventors in conventional systems. For example, in one aspect, a processor implemented method for segmenting interactive session text comprising a plurality of input text posts is provided. The method comprising: obtaining the plurality of input text posts pertaining to a plurality of users; computing a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users; assigning a weightage to each distance value computed for the one or more criteria; computing a weighted sum based on the assigned weightage; and performing, until information loss in the plurality of input text posts reaches a pre-determined threshold: generating based on the one or more criteria, using a corresponding distance value obtained from the weighted sum, a segmented interactive session text from the plurality of input text posts; and updating the distance value associated with each of the two or more adjacent input text posts, the time difference and the one or more users.

In an embodiment, the distance value for the second criteria is obtained when time difference between input text posts is smaller than a pre-defined threshold. In an embodiment, the one or more users comprises at least one of (i) number of users posting and (ii) one or more users mentioned in the plurality of input text posts.

In another aspect, a system for segmenting interactive session text comprising a plurality of input text posts is provided. The system comprising: a memory storing instructions; one or more communication interfaces; and one or more hardware processors coupled to the memory via the one or more communication interfaces, wherein the one or more hardware processors are configured by the instructions to: obtain the plurality of input text posts pertaining to a plurality of users; compute a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users; assigning a weightage to each distance value computed for the one or more criteria; compute a weighted sum based on the assigned weightage; and perform, until information loss in the plurality of input text posts reaches a pre-determined threshold: generate based on the one or more criteria, using a corresponding distance value obtained from the weighted sum, a segmented interactive session text from the plurality of input text posts; and update the distance value associated with each of the two or more adjacent input text posts, the time difference and the one or more users.

In an embodiment, the distance value for the second criteria is obtained when time difference between input text posts is smaller than a pre-defined threshold. In an embodiment, the one or more users comprises at least one of (i) number of users posting and (ii) one or more users mentioned in the plurality of input text posts.

In yet another aspect, one or more non-transitory machine readable information storage mediums comprising one or more instructions is provided. The one or more instructions which when executed by one or more hardware processors causes a method for obtaining the plurality of input text posts pertaining to a plurality of users; computing a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users; assigning a weightage to each distance value computed for the one or more criteria; computing a weighted sum based on the assigned weightage; and performing, until information loss in the plurality of input text posts reaches a pre-determined threshold: generating based on the one or more criteria, using a corresponding distance value obtained from the weighted sum, a segmented interactive session text from the plurality of input text posts; and updating the distance value associated with each of the two or more adjacent input text posts, the time difference and the one or more users.

In an embodiment, the distance value for the second criteria is obtained when time difference between input text posts is smaller than a pre-defined threshold. In an embodiment, the one or more users comprises at least one of (i) number of users posting and (ii) one or more users mentioned in the plurality of input text posts.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for segmenting interactive session text by using an Information Bottleneck (IB) technique according to an embodiment of the present disclosure.
FIG. 2 illustrates an exemplary flow diagram of a method for segmenting interactive session text by using an Information Bottleneck (IB) technique implemented by the system of FIG. 1 in accordance with an embodiment of the present disclosure.
FIGS. 3A through 3C depict manually created ground truth for public conversations in accordance with an example embodiment of the present disclosure.
FIGS. 3D through FIG. 3F depict results obtained for multiple approaches in accordance with an embodiment of the present disclosure.
FIG. 4 illustrates a graphical representation depicting fraction of words less than a given word frequency in accordance with an example embodiment of the present disclosure.
FIG. 5 illustrates a graphical representation depicting normalized frequency distribution of segment length for both a first dataset and a second dataset in accordance with an embodiment of the present disclosure.
FIG. 6 illustrates a graphical representation depicting behaviour of the average of performance evaluation metric $P_k$ over the test set of first dataset with respect to hyper-parameter $\beta$ in accordance with an example embodiment of the present disclosure.
FIG. 7 illustrates a graphical representation Average evaluation metric $P_k$ over first dataset with respect to hyper-parameter $\theta$ in accordance with an example embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

Research in text segmentation has a long history going back to few of the earliest attempts. Since then many methods, including but not limited to, Texttiling, representation learning based on semantic embeddings, and topic models have been presented. Albeit, very little research effort has been proposed for segmenting informal chat text but has resulted in information loss with less accuracy.

The Information Bottleneck (IB) method has been previously applied to clustering in the Natural Language Processing (NLP) domain. Specifically, IB attempts to balance the trade-off between accuracy and compression (or complexity) while clustering the target variable, given a joint probability distribution between the target variable and an observed relevant variable. Similar to clustering, the proposed present disclosure and the embodiments of the present disclosure interprets the task of text segmentation as a compression task with a constraint that allows only contiguous text snippets to be in a group. The focus of the present disclosure is to provide systems and methods for interactive session text segmentation utilizing the IB framework. In the process, the proposed present disclosure introduce an IB inspired objective function for the task of text segmentation. The proposed disclosure implements an agglomerative algorithm to optimize the proposed objective function that also respects the necessary sequential continuity constraint for text segmentation and addresses segmentation for interactive session (chat) text and incorporates non-textual clues.

The IB method was originally introduced as a generalization of rate distortion theory which balances the tradeoff between the preservation of information about a relevance variable and the distortion of the target variable. Later on, similar to this work, a greedy bottom-up (agglomerative) IB based approach was successfully applied to NLP tasks such as document clustering.

Furthermore, the IB method has been widely studied for multiple machine learning tasks, including but not limited to, speech diarization, image segmentation, image clustering, and visualization. Particularly, image segmentation has considered segmentation as the compression part of the IB based method. But, image segmentation does not involve continuity constraints as their application can abolish the exploitation of similarity within the image. Yet another similar attempt that utilizes information theoretic terms as an objective (only the first term of the IB approach) has been made for the task of text segmentation and alignment.

Broadly stating, a typical text segmentation method comprises of a method that: (a) consumes text representations for every independent text snippet, and (b) applies a search procedure for segmentation boundaries while optimizing objectives for segmentation. Here, the present disclosure reviews and discusses text segmentation by organizing them into 3 categories based on their focus: Category 1 - (a), Category 2 - (b), and Category 3 - both (a) and (b).

Category 1 approaches utilize or benefit from a great amount of effort put in developing robust topic models that can model discourse in natural language texts. A hierarchical Bayesian model was proposed for unsupervised topic segmentation that integrates a point-wise boundary sampling algorithm used in Bayesian segmentation into a structured (ordering-based) topic model.

Category 2 approaches comprise of different search procedures proposed for the task of text segmentation, including but not limited to, divisive hierarchical clustering, dynamic programming, and graph based clustering. This work proposes an agglomerative IB based hierarchical clustering algorithm - an addition to the arsenal of the approaches that falls in this category.

Similar to the proposed method, Category3 cuts across both of the above introduced dimensions of segmentation. The use of semantic word embeddings and a relaxed dynamic programming procedure was also proposed previously by researchers. In the present disclosure the embodiments and the systems and methods utilize chat clues and introduce an IB based approach augmented with sequential continuity constraints.

Beyond the above mentioned categorization, a significant amount of research effort has been put up in studying the evaluation metric for text segmentation. While these methods look similar to the proposed method, they differ as they attempt to recover thread structure with respect to the topic level view of the discussions within a thread community.

The most similar direction of research to this work is on conversation trees and disentangling chat conversations. Both of these directions cluster independent posts leading to topic labelling and segmentation of these posts simultaneously. It is important to note that these methods do not have a sequential continuity constraint and consider lexical similarity even between long distant posts. Moreover, if these methods are applied only for segmentation then they are very likely to produce segments with relatively very smaller durations; as reflected in the ground truth annotations of correspondingly released dataset.

Embodiments of the present disclosure provide systems and methods for segmenting interactive session text using the information bottleneck method, augmented with sequential continuity constraints. Furthermore, the present disclosure and its embodiments utilize critical non-textual clues such as time between two consecutive posts and people mentions within the posts. To ascertain the effectiveness of the proposed method of the present disclosure, data was collected from public conversations and a proprietary platform deployed. Experiments demonstrated that the proposed method yields an absolute (relative) improvement of as high as 3.23% (11.25%).

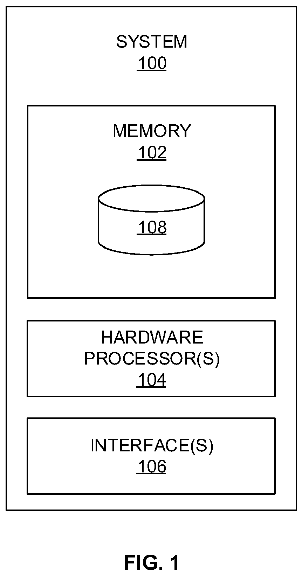

Referring now to the drawings, and more particularly to FIGS. 1 through 7, where similar reference characters denote corresponding features consistently throughout the figures, there are shown preferred embodiments and these embodiments are described in the context of the following exemplary system and/or method.

FIG. 1 illustrates an exemplary block diagram of a system 100 for segmenting interactive session text by using an Information Bottleneck (IB) technique according to an embodiment of the present disclosure. In an embodiment, the system 100 includes one or more processors 104, communication interface device(s) or input/output (I/O) interface(s) 106, and one or more data storage devices or memory 102 operatively coupled to the one or more processors 104. The one or more processors 104 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the device 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 108 can be stored in the memory 102, wherein the database 108 may comprise, but are not limited to information pertaining to text or posts pertaining to a plurality of users, distance value between two or more adjacent posts, number of users posting chats, number of users being mentioned in one or more specific chat texts, and the like. In an embodiment, the memory 102 may store the above information, which are utilized by the one or more hardware processors 104 (or by the system 100) to perform the methodology described herein.

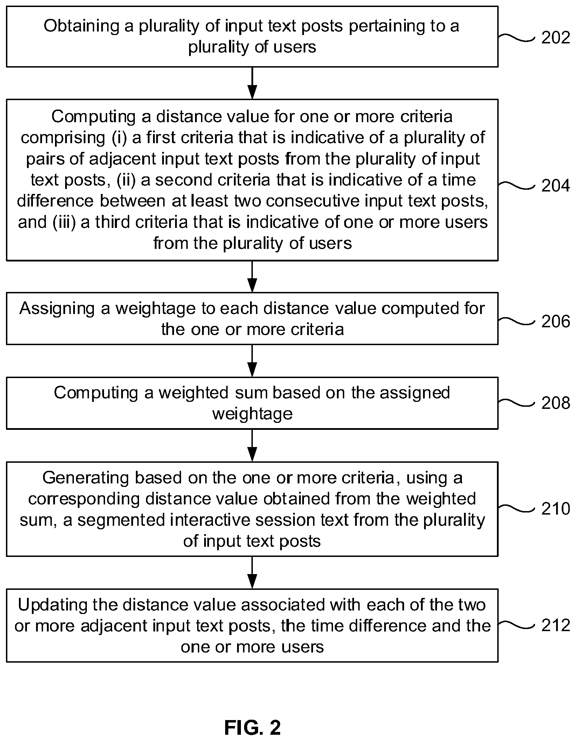

FIG. 2, with reference to FIG. 1, illustrates an exemplary flow diagram of a method for segmenting interactive session text by using an Information Bottleneck (IB) technique implemented by the system 100 of FIG. 1 in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to the components of the system 100 as depicted in FIG. 1, and the flow diagram of FIG. 2. In an embodiment of the present disclosure, at step 202, the one or more hardware processors 104 obtain the plurality of input text posts pertaining to a plurality of users. In an embodiment of the present disclosure, the plurality of input text posts may be comprised in an interactive session text. In another embodiment, the plurality of input text posts may be obtained in real-time (or near real-time), wherein the proposed method may be implemented and/or executed by the system 100 in real-time (or near real-time).

In an embodiment of the present disclosure, at step 202, the one or more hardware processors 104 compute a distance value for one or more criteria. In an embodiment, the one or more criteria comprise (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users. In other words, the distance value is computed for the plurality of input text posts based on (i) the plurality of pairs of adjacent input text posts from the plurality of input text posts, (ii) a time difference between at least two consecutive input text posts, and (iii) one or more users from the plurality of users. In an example embodiment, the one or more users comprises at least one of (i) number of users posting one or more input text posts and (ii) one or more users mentioned in at least a subset of the plurality of input text posts. In an example embodiment the distance value for the second criteria is obtained when time difference between input text posts is smaller than a pre-defined threshold. In an example embodiment, the first criteria pertains to a first level segmentation, the second criteria pertains to a second level segmentation, and the third criteria pertains to a third level segmentation.

In an embodiment of the present disclosure, at step 206, the one or more hardware processors 104 assign a weightage to each distance value that is computed for the one or more criteria. In an embodiment of the present disclosure, at step 208, the one or more hardware processors 104 compute a weighted sum based on the assigned weightage.

In an embodiment of the present disclosure, at step 210, the one or more hardware processors 104 generate based on the one or more criteria, using a corresponding distance value obtained from the weighted sum, a segmented interactive session text from the plurality of input text posts. In an embodiment of the present disclosure, distance value that is least corresponding to the weighted sum is utilized for generation of the segmented interactive session text from the plurality of input text posts. In an embodiment of the present disclosure, at step 212, the one or more hardware processors 104 update (i) the distance value associated with each of the two or more adjacent input text posts, (ii) the time difference and (iii) the one or more users. In an embodiment of the present disclosure, the steps 210 and 212 are executed and/or performed, until information loss in the plurality of input text posts reaches a pre-determined threshold (discussed in later sections).

Below illustrated is a proposed methodology by the system:

Let $C$ be an input chat text sequence $C=\{c_1,..., c_i,..., c_{|t|}\}$ of length $|C|$, where $c_i$ is a text snippet such as a sentence or a post from chat text. In a chat scenario, text post $c_i$ has a corresponding time-stamp $c_i^t$. A segment or a subsequence can be represented as $C_{a:b} = \{c_a, ..., c_b\}$. A segmentation of $C$ is defined as a segment sequence $S=\{s_1, ...,s_p\}$, where $s_j = C_{aj:bj}$ and $b_j + 1 = a_{j+1}$. Given an input text sequence $C$, the segmentation is defined as the task of finding the most probable segment sequence S.

The proposed IB inspired method is augmented to incorporate important non-textual clues that arise in a chat scenario. More specifically, the time between two consecutive posts and people mentions within the posts are integrated into the proposed IB inspired approach for the text segmentation task.

The IB introduces a set of relevance variables $R$ which encapsulate meaningful information about $C$ while compressing the data points. Similarly, the system 100 and embodiments of the present disclosure propose that a segment sequence $S$ should also contain as much information as possible about $R$ (i.e., maximize $I(R;S)$), constrained by mutual information between $S$ and $C$ (i.e., minimize $I(S;C)$). Here, $C$ is a chat text sequence, following the notation introduced in the previous section. The IB objective can be achieved by maximizing the following:

$$F = I(R,S) - \frac{1}{\beta} \times I(S,C) \quad (1)$$

In other words, the above IB objective function attempts to balance a trade-off between the most informative segmentation of $R$ and the most compact representation of $C$; where $\beta$ is a constant parameter to control the relative importance.

$R$ is modeled as word clusters and optimize $F$ in an agglomerative fashion, as explained in Algorithm 1 below. In simple words, the maximization of $F$ boils down to agglomeratively merging an adjacent pair of posts that correspond to least value of d. In Algorithm 1, $\bar{p}(s)$ is equal to $p(s_i) + p(s_{i+1})$ and $d(s_i, s_{i+1})$ is computed using the following definition:

$$d(s_i, s_{i+1}) = JSD\left[p(R|s_i), p(R|s_{i+1})\right] - \frac{1}{\beta} \times JSD\left[p(C|s_i), p(C|s_{i+1})\right] \quad (2)$$

Here, *JSD* indicates Jensen-Shannon-Divergence. The computation of $R$ and $p(R, C)$ is explained later in sections below. Stopping criterion for Algorithm 1 is $SC > \theta$, where $SC$ is computed as follows:

$$SC = \frac{I(R,S)}{I(R,C)} \quad (3)$$

The value of $SC$ is expected to decrease due to a relatively large dip in the value of $I(R,S)$ when more dissimilar clusters are merged. Therefore, $SC$ provides strong clues to terminate the proposed IB approach. The inspiration behind this specific computation of $SC$ has come from the fact that it has produced stable results when experimented with a similar task of speaker diarization. The value of $\theta$ is tuned by optimizing the performance over a validation dataset just like other hyper-parameters.

Algorithm 1: IB inspired segmentation of interactive session text:

Input:    Joint distribution: $p(R, C)$, Tradeoff parameter $\beta$

Output:    Segmentation sequence: $S$

Initialization:  $S \leftarrow C$

Calculate $\Delta F(s_i, s_{i+1}) = p(\bar{s}) \times d(s_i, s_{i+1}) \forall s_i \in S$

1 **while** Stopping criterion is false **do**

2 $\{i\} = argmin_{i'} \Delta F(s_{i'}, s_{i'+1});$

3 Merge $\{s_i, s_{i+1}\} \Rightarrow \bar{s} \in S;$

4 Update $\Delta F(\bar{s}, s_{i-1})$ and $\Delta F(\bar{s}, s_{i+2});$

5 **end**

The IB inspired text segmentation algorithm (Algorithm 1) respects the sequential continuity constraint, as it considers merging only adjacent pairs (see step 2, 3, and 4 of Algorithm 1) while optimizing *F;* unlike the agglomerative IB clustering. As a result of this, the proposed IB based approach requires a limited number of involved computations, more precisely, linear in terms of number of text snippets.

**Incorporating Non-Textual Clues:**

As mentioned above, non-textual clues / non-textual information (such as time between two consecutive posts and people mentions within the posts) are critical for segmenting chat text. To incorporate these two important clues, Algorithm 1 is augmented, and more precisely, modify d of Equation/expression (2) to $\bar{d}$ as follows:

$$\bar{d}(s_i, s_{i+1}) = w_1 \times d(s_i, s_{i+1}) + w_2 \times \left(c^t_{a_i+1} - c^t_{b_i}\right) + w_3 \times \left\|s^p_i - s^p_{i+1}\right\| \quad (4)$$

Here $c^t_{a_i+1},\ c^t_{b_i}$ and $s^p_i$ represent time-stamp of the first post of segment $s_{i+1}$, time stamp of last post of segment $s_i$, and representation for poster information embedded in segment $s_i$, respectively. The $s^p_i$ representation is computed as a bag of posters counting all the people mentioned in the posts and posters themselves in a segment. $w_1$, $w_2$, $w_3$ are weights indicating the relative importance of distance terms computed for all three different clues. $\|.\|$ in equation/expression (4) indicates Euclidean norm.

It is important to note that Algorithm 1 utilizes *d* of equation/expression (2) to represent textual dissimilarity between a pair of posts in order to achieve the optimal segment sequence *S.* Following the same intuition, $\bar{d}$ in equation 4 measures weighted distances based not only on textual similarity but also based on information in time-stamps, posters and people mentioned. The intuition behind the second distance term in $\bar{d}$ is that if the time difference between posts is small then they are likely to be in the same segment. Additionally, the third distance term (or distance value) in $\bar{d}$ is intended to merge segments that involve a higher number of common posters and people mentions. Following the same intuition, in addition to the changes in $\bar{d}$, the stopping criterion is modified (e.g., generating segmented interactive session text and updating the distance value associated with each of the two or more adjacent input text posts, the time difference and the one or more users until *'information loss in the plurality of input text posts reaches a pre-determined threshold'*) by the embodiments of the present disclosure. The stopping criterion is defined as *SC > θ*, where *SC* is as follows:

$$SC = w_1 \times \frac{I(R,S)}{I(R,C)} + w_2 \times \left(1 - \frac{G(S)}{G_{max}}\right) + w_3 \times \frac{H(S)}{H_{max}} \quad (5)$$

Here, *G(S)* and *H(S)* mentioned in equation (5) are computed as follows:

$$G(S) = \sum_{s_i \in S} c_{b_i}^t - c_{a_i}^t \qquad (6)$$

$$H(S) = \sum_{i=1}^{|S|} \left\| s_i^p - s_{i+1}^p \right\| \qquad (7)$$

The first term in *SC* in equation/expression (5) is taken from the stopping criterion of Algorithm 1 and the remaining second and third terms are similarly derived. Both the second and third terms decrease as the cardinality of *S* is decreased and reflect analogous behaviour to the two introduced important clues. The first term computes the fraction of information contained in *S* about *R*, normalized by the information contained in *C* about *R;* similarly, the second term computes the fraction of time duration between segments normalized by total duration of chat text sequence (i.e., 1 - fraction of durations of all segments normalized by total duration), and the third term computes the sum of inter segment distances in terms of poster information by the maximum distance of similar terms (i.e., when each post is a segment).

**Experiments:**

Datasets were collected from the real world conversation platforms discussed in later sections, and evaluation metric utilized are explained from the experiments. The present disclosure also describes meaningful baselines developed for a fair comparison with the proposed IB approach. Also discussed is the performance accomplished by the proposed approach on both of the collected datasets. Lastly, the stability of the proposed IB approach with respect to parameters $\beta$ and $\theta$ are analyzed.

**Datasets Description:**

Interactive session text datasets were collected, e.g., first dataset and second dataset and were (manually) annotated for the text segmentation task. The annotations done were utilized with problematic cases resolved by consensus. Datasets' statistics is illustrated in Table 1 by way of example below.

Table 1

|  | First dataset | Second dataset |
|---|---|---|
| #Threads | 5 | 46 |
| #Posts | 9000 | 5000 |
| #Segments | 900 | 800 |
| #Documents | 73 | 73 |

As depicted in Table 1, the collected raw data was in the form of threads, which was later divided into segments. Further, multiple documents were created where each document contains *N* continuous segments from the original threads. *N* was selected randomly between 5 and 15. 60% of these documents were used for tuning hyper-parameters which include weights ($w_1$, $w_2$, $w_3$), $\theta$, and $\beta$; and the remaining were used for testing.

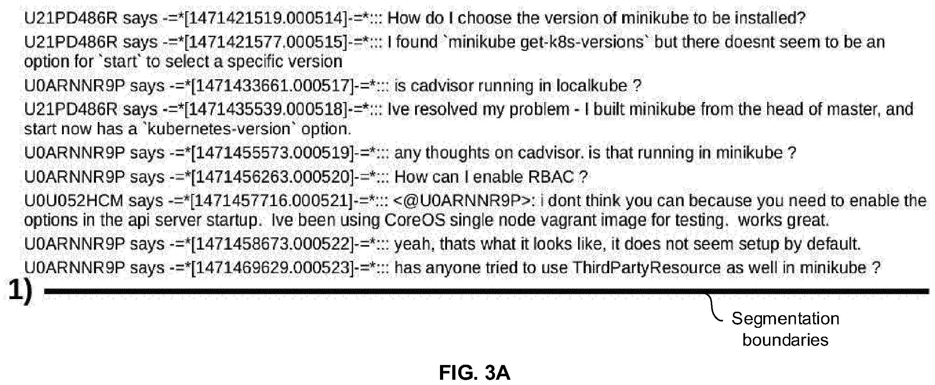

A small portion of one of the documents from the first dataset is depicted in FIGS. 3A through. Here, manual annotations are marked by a bold black horizontal line, and also enumerated as 1), 2), and 3). Every text line is a post made by one of the users on the first dataset platform during conversations. As mentioned above, in a chat scenario, every post has following three integral components:

1. poster (indicated by corresponding identity in FIGS. 3A through 3C, from beginning till '-=[*says'),
2. time-stamp (between '-=[*' and '*]=-)', and
3. textual content (after '*]=-::: 'till end).

It is to be noticed that some of the posts also have people mentions within the posts (indicated as '<@USERID>' in FIGS. 3A through 3C.

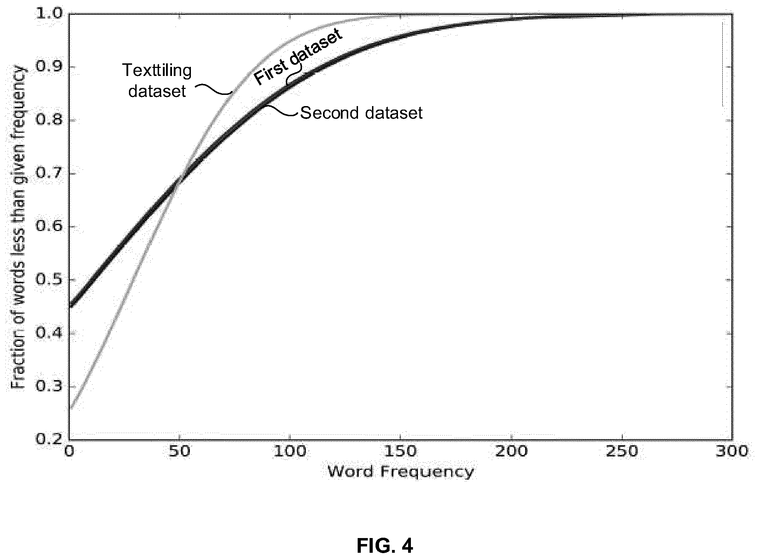

To validate the differences between the collected chat datasets and traditional datasets, the system 100 computed the fraction of words occurring with a frequency less than a given word frequency, as shown in FIG. 4. More particularly, FIG. 4, with reference to FIGS. 1 through 3F, illustrates a graphical representation depicting fraction of words less than a given word frequency in accordance with an example embodiment of the present disclosure. It is clearly evident from FIG. 4 that chat segmentation datasets have a significantly high proportion of less frequent words in comparison to the traditional text segmentation datasets. The presence of large infrequent words makes it hard for textual similarity methods to succeed as it will increase the proportion of out of vocabulary words. Therefore, it becomes even more critical to utilize the non-textual clues while processing chat text.

**Evaluation and setup:**

For performance evaluation, the embodiments of the present disclosure employed $P_k$ metric which is widely utilized for evaluating the text segmentation task. A sliding window of fixed size $k$ (usually half of the average of length of all the segments in the document) slides over the entire document from top to bottom. Both inter and intra segment errors for all posts $k$ apart is calculated by comparing inferred and annotated boundaries.

The set of relevance variables $R$ is modeled as word clusters estimated by utilizing agglomerative IB based document clustering technique(s) where posts are treated as relevance variables. Consequently, $R$ comprises of informative word clusters about posts. Thus, each entry $p(r_i; c_j)$ in matrix $p(R; C)$ represents the joint probability of getting a word cluster $r_i$ in post $c_j$. $p(r_i; c_j)$ is calculated simply by counting the common words in $r_i$ and $c_j$ and then normalizing.

**Baseline approaches:**

For comparisons, multiple baselines were developed. In Random, 5 to 15 boundaries are inserted randomly. In case of No Boundary, the entire document is labelled as one segment. Next, C-99 and Dynamic Programming were implemented, which are classical benchmarks for the text segmentation task. Another very simple and yet effective baseline Average Time is prepared, in which boundaries are inserted after a fixed amount of time has elapsed. Fixed time is calculated from a certain separate portion of the annotated dataset.

Next baseline utilized in the experiments conducted by the present disclosure is Encoder-Decoder Distance. In this approach, a sequence to sequence RNN encoder-decoder was trained utilizing 1.5 million posts from the publicly available dataset (e.g., first dataset) excluding the labelled portion. The network comprises of 2 hidden layers and the hidden state dimension was set to 256 for each. The encoded representation was utilized and greedily merged in an agglomerative fashion using Euclidean distance. The stopping criterion for this approach was similar to the third term in Equation/expression 5 corresponding to poster information. Similar to Encoder-Decoder Distance, LDA Distance was developed where representations have come from a topic model having 100 topics.

**Quantitative Results:**

The results for all prepared baselines and variants of IB on both first and second datasets are mentioned in Table 2 which is illustrated by way of examples below:

Table 2

| Methods | Span of weights | First dataset | Second dataset |
|---|---|---|---|
| Random | - | 60.6 | 54 |
| No Boundary | - | 36.76 | 45 |
| Average Time | - | 32 | 35 |
| C-99 | - | 35.18 | 37.75 |
| Dynamic Programming | - | 28.7 | 35 |
| Encoder-Decoder Distance | - | 29 | 38 |
| LDA Distance | - | 36 | 44 |
| **IB Variants:** | | | |
| Text TimeDiff | $w_1 = 1, w_2 = 0, w_3 = 0$ | 33 | 42 |
| Poster | $w_1 = 0, w_2 = 1, w_3 = 0$ | **26.75** | **34.25** |
| Text + TimeDiff | $w_1 = 0, w_2 = 0, w_3 = 1$ | 34.52 | 41.50 |
| Text + Poster | $\forall\, w \in \{w_1, w_2\}, w \in (0,1); w_3 = 0; w_1 + w_2 = 1$ | **26.47** | **34.68** |
| Text + TimeDiff | $\forall\, w \in \{w_1, w_3\}, w \in (0,1); w_2 = 0; w_1 + w_3 = 1$ | **28.57** | 38.21 |
| + Poster | $\forall\, w \in \{w_1, w_2, w_3\}, w \in (0,1); w_1 + w_2 + w_3 = 1$ | **25.47** | 34.80 |

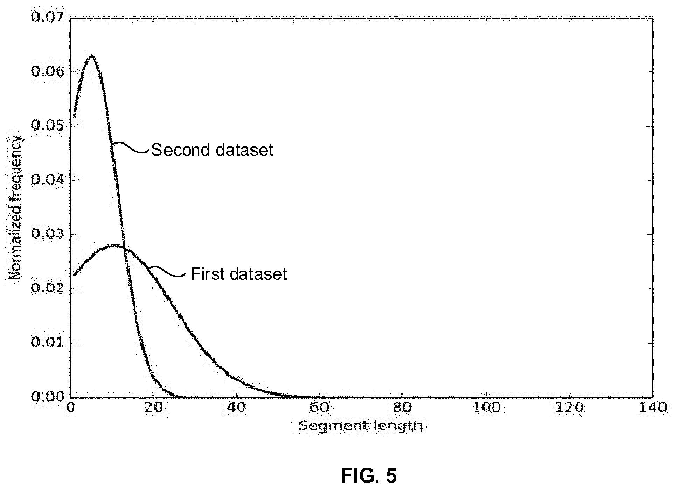

As depicted in Table 2, for both first and second datasets, multiple variants of IB yield superior performance when compared against all the developed baselines. More precisely, for first dataset, 4 different variants of the proposed IB based method achieve higher performance with an absolute improvement of as high as **3.23%** and a relative improvement of **11.25%,** when compared against the baselines. In case of second dataset, 3 different variants of the proposed method achieve superior performance but not as significantly in terms of absolute $P_k$ value, as they do for the second dataset. It is hypothesized that such a behavior is potentially because of the lesser value of posts per segment for second dataset (5000/800=6.25) in comparison to first dataset (9000/900=10). Also, note that just the time clue in IB framework performs best on second dataset indicating that the relative importance of time clue will be higher for a dataset with smaller lengths of segments (i.e., low value of posts per segment). To validate the proposed hypothesize further, the normalized frequency distribution of segment length (number of posts per segment) was estimated for both datasets, as shown in FIG. 5. More particularly, FIG. 5, with reference to FIGS. 1 through 4, illustrates a graphical representation depicting normalized frequency distribution of segment length for both a first dataset and a second dataset in accordance with an embodiment of the present disclosure.

It is worth noting that the obtained empirical results support the major hypothesis of proposed methodology. As variants of IB yield superior performance on both the datasets. Also, on incorporation of individual non-textual clues, superior improvements of 3.23% and 7.32% are observed from Text to Text+TimeDiff for first and second dataset, respectively; similarly, from Text to Text+Poster improvements of 4.43% and 3.79% are observed for first and second dataset, respectively. Further, the best performance is achieved for both the datasets on fusing both the non-textual clues indicating that clues are complementary as well.

**Qualitative Results:**

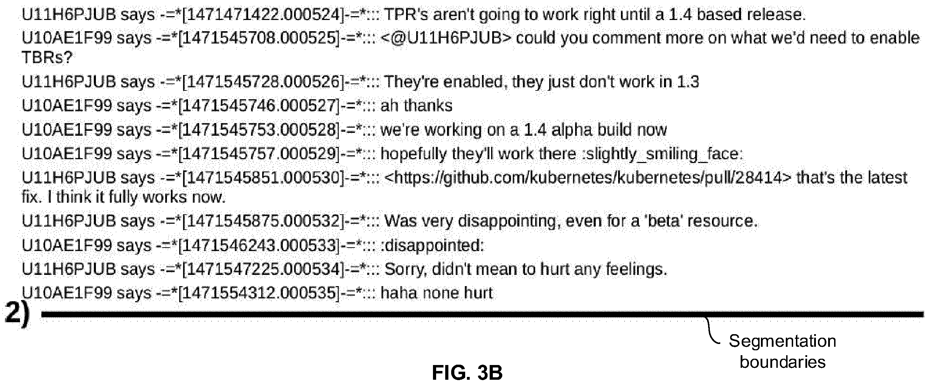

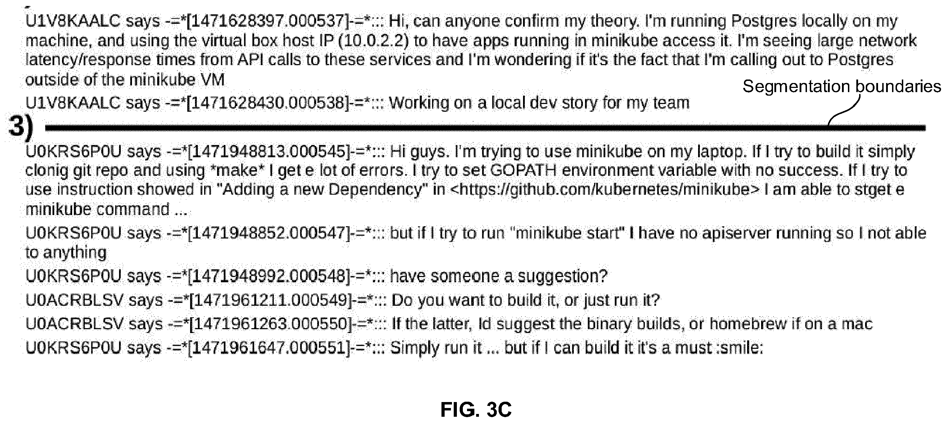

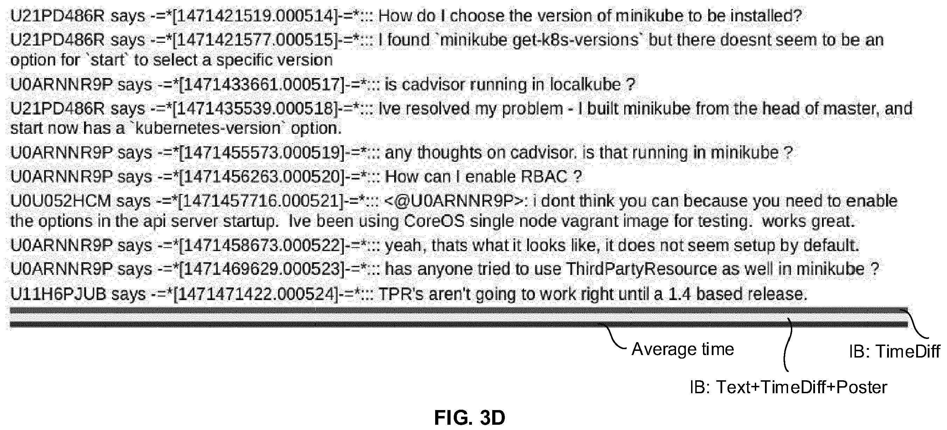

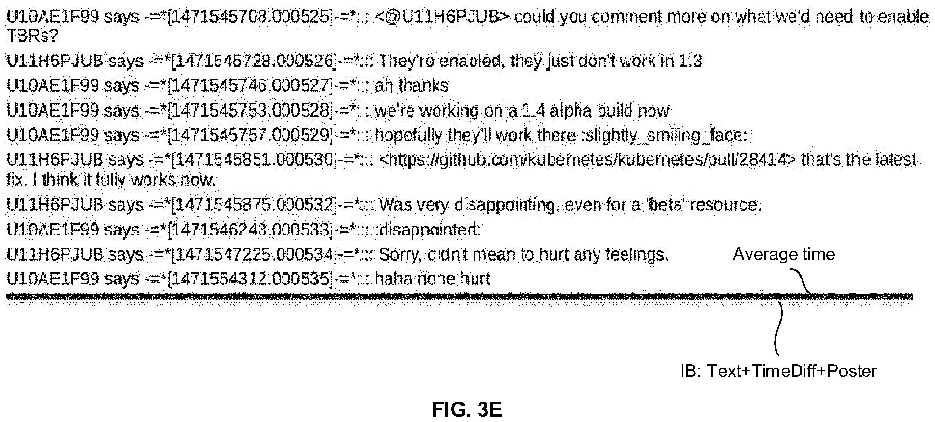

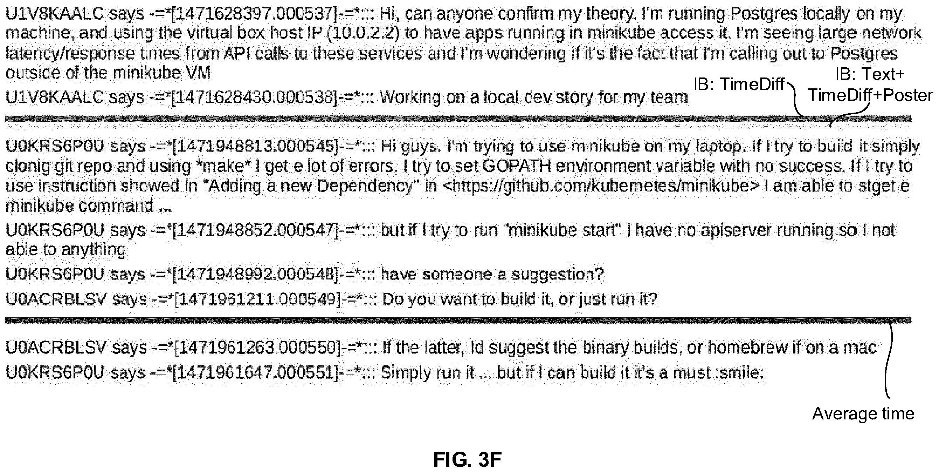

Results obtained for multiple approaches, namely, Average Time, IB:TimeDiff, and IB:Text+TimeDiff+Poster, corresponding to a small portion of chat text placed in part of FIG. 3A, 3B, 3C are presented in part FIG. 3D, 3E, 3F. More particularly, FIGS. 3A through 3C, with reference to FIGS. 1-2, depict manually created ground truth for public conversations (first dataset conversations) in accordance with an example embodiment of the present disclosure. The solid lines in FIGS. 3A through depict segmentation boundaries. FIGS. 3D through FIG. 3F, with reference to FIGS. 1 through 3C, depict results obtained for multiple approaches in accordance with an embodiment of the present disclosure. Average Time baseline (indicated by Average Time) managed to find three boundaries, albeit one of the boundary is significantly off, potentially due to the constraint of fixed time duration.

Similarly, the next IB:TimeDiff approach also manages to find first two boundaries correctly but fails to recover the third boundary. Results seem to indicate that the time clue is not very effective to reconstruct segmentation boundaries when segment length varies a lot within the document. Interestingly, the combination of all three clues as happens in the IB:Text+TimeDiff+Poster approach, yielded the best results as all of three segmentation boundaries in ground truth are recovered with high precision. Therefore, the present disclosure submits that the incorporation of non-textual clues is critical to achieve superior results to segment chat text.

**Effect Of Parameters:**

To analyse the behaviour of the proposed IB based methods, the average performance metric $P_k$ of IB:Text was computed with respect to $\beta$ and $\theta$, over the test set of first dataset. Also, to facilitate the reproduction of results, optimal values of all the parameters was mentioned for all the variants of the proposed IB approach in Table 3. More particularly, Table 3 depicts optimal values of parameters corresponding to results obtained by IB variants in Table 2.

Table 3

| IB Variants | First dataset | | | Second dataset | | |
|---|---|---|---|---|---|---|
| | $\beta$ | $(w_1, w_2, w_3)$ | $\theta$ | $\beta$ | $(w_1, w_2, w_3)$ | $\theta$ |
| Text | 1000 | (1,0,0) | 0.4 | 100 0 | (1,0,0) | 0.5 |
| TimeDiff | 750 | (0,1,0) | 0.9 | 750 | (0,1,0) | 0.9 |
| Poster | 750 | (0,0,1) | 0.09 | 750 | (0,0,1) | 0.1 |
| Text+TimeDiff | 750 | (0.3,0.7,0) | 0.75 | 750 | (0.3,0.7,0) | 0.75 |
| Text+Poster | 750 | (0.1,0,0.9) | 0.2 | $\infty$ | (0.3,0,0.7) | 0.2 |
| Text+ TimeDiff +Poster | 750 | (0.24,0.58,0.18) | 0.65 | 750 | (0.10,0.63,0.27) | 0.65 |

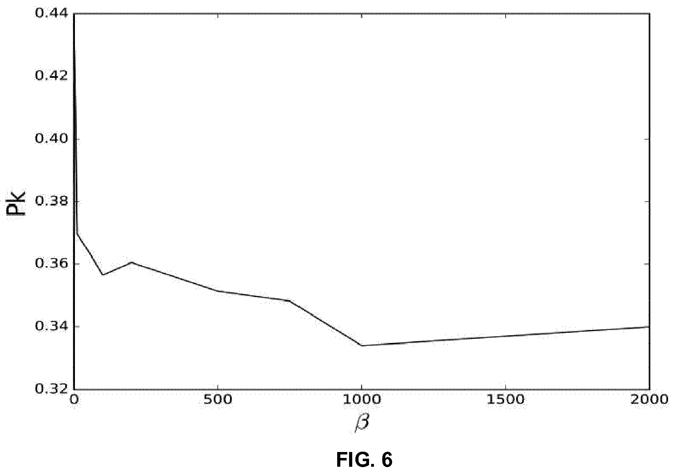

FIG. 6, with reference to FIGS. 1 through 5, illustrates a graphical representation depicting behaviour of the average of performance evaluation metric $P_k$ over the test set of first dataset with respect to hyper-parameter $\beta$ in accordance with an example embodiment of the present disclosure. As mentioned above also, the parameter $\beta$ represents a trade-off between the preserved amount of information and the level of compression. It is clearly observable that the optimal value of $\beta$ does not lie on extremes indicating the importance of both the terms (as in Equation 1) of the proposed IB method. The coefficient of the second term (i.e., $\frac{1}{\beta}$ equals to 10$^{-3}$) is smaller. It could be interpreted that the behaviour of the second term as a regularization term because $\frac{1}{\beta}$ controls the complexity of the learnt segment sequence S. Furthermore, optimal values in Table 3 for variants with fusion of two or more clues indicate complementary and relative importance of the studied non-textual clues.

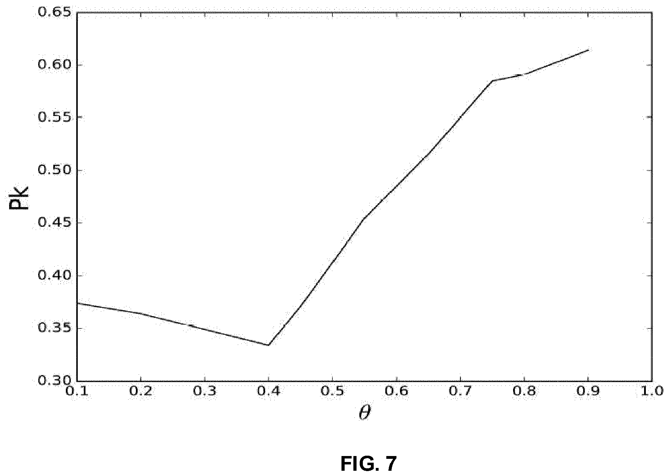

The average performance evaluation metric $P_k$ over test set of the first dataset with respect to hyper-parameter $\theta$ is depicted in FIG. 7. More particularly, FIG. 7, with reference to FIGS. 1 through 6, illustrates a graphical representation Average evaluation metric $P_k$ over first dataset with respect to hyper-parameter $\theta$ in accordance with an example embodiment of the present disclosure. FIG. 7 makes the appropriateness of the stopping criterion clearly evident. Initially, the average of $P_k$ value decreases as more coherent posts are merged and continues to decrease till it is less than a particular value of $\theta$. After that, the average of $P_k$ value starts increasing potentially due to the merging of more dissimilar segments. The optimal values of $\theta$ varies significantly from one variant to another requiring a mandatory tuning over the validation dataset, as mentioned in Table 3, for all IB variants proposed in the present disclosure.

The present disclosure highlights the increasing importance of efficient methods to process chat text, in particular for text segmentation. The system 100 collected and introduced datasets for the same. The introduction of chat text datasets has enabled the system 100 to explore segmentation approaches that are specific to chat text. Further, the results provided by the present disclosure demonstrate that the proposed IB method yields an absolute improvement of as high as **3.23**%. Also, a significant boost (**3.79**%-**7.32**%) in performance is observed on incorporation of non-textual clues indicating their criticality.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, BLU-RAYs, flash drives, disks, and any other known physical storage media.

It is intended that the disclosure and examples be considered as exemplary only, with a true scope and spirit of disclosed embodiments being indicated by the following claims.

**Claims**

1. A processor implemented method for segmenting interactive session text comprising a plurality of input text posts, the method comprising:

   obtaining the plurality of input text posts pertaining to a plurality of users (202);
   computing a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users (204);
   assigning a weightage to each distance value computed for the one or more criteria (206);
   computing a weighted sum based on the assigned weightage (208); and
   performing, until information loss in the plurality of input text posts reaches a pre-determined threshold,

      generating based on the one or more criteria, using a corresponding distance value obtained from the weighted sum, a segmented interactive session text from the plurality of input text posts (210); and
      updating the distance value associated with each of the two or more adjacent input text posts, the time difference and the one or more users (212).

2. The processor implemented method of claim 1, wherein the distance value for the second criteria is obtained when time difference between input text posts is smaller than a pre-defined threshold.

3. The processor implemented method of claim 1, wherein the one or more users comprises at least one of (i) number of users posting and (ii) one or more users mentioned in the plurality of input text posts.

4. A system (100) for segmenting interactive session text comprising a plurality of input text posts, the system (100) comprising:

   a memory (102) storing instructions;
   one or more communication interfaces (106); and
   one or more hardware processors (104) coupled to the memory (102) via the one or more communication interfaces (106), wherein the one or more hardware processors (104) are configured by the instructions to:

      obtain the plurality of input text posts pertaining to a plurality of users;
      compute a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users;
      assigning a weightage to each distance value computed for the one or more criteria;
      compute a weighted sum based on the assigned weightage; and
      perform, until information loss in the plurality of input text posts reaches a pre-determined threshold,

generate based on the one or more criteria, using a corresponding distance value obtained from the weighted sum, a segmented interactive session text from the plurality of input text posts; and
update the distance value associated with each of the two or more adjacent input text posts, the time difference and the one or more users.

5. The system of claim 4, wherein the distance value for the second criteria is obtained when time difference between input text posts is smaller than a pre-defined threshold.

6. The system of claim 4, wherein the one or more users comprises at least one of (i) number of users posting and (ii) one or more users mentioned in the plurality of input text posts.

7. One or more non-transitory machine readable information storage mediums comprising one or more instructions which when executed by one or more hardware processors cause a processor implemented method for segmenting interactive session text comprising a plurality of input text posts, the method comprising:

obtaining the plurality of input text posts pertaining to a plurality of users;
computing a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users;
assigning a weightage to each distance value computed for the one or more criteria;
computing a weighted sum based on the assigned weightage; and
performing, until information loss in the plurality of input text posts reaches a pre-determined threshold,

generating based on the one or more criteria, using a corresponding distance value obtained from the weighted sum, a segmented interactive session text from the plurality of input text posts; and
updating the distance value associated with each of the two or more adjacent input text posts, the time difference and the one or more users.

8. The one or more non-transitory machine readable information storage mediums of claim 7, wherein the distance value for the second criteria is obtained when time difference between input text posts is smaller than a pre-defined threshold.

9. The one or more non-transitory machine readable information storage mediums of claim 7, wherein the one or more users comprises at least one of (i) number of users posting and (ii) one or more users mentioned in the plurality of input text posts.

SYSTEM
100

MEMORY
102

108

HARDWARE
PROCESSOR(S)
104

INTERFACE(S)
106

**FIG. 1**

| Obtaining a plurality of input text posts pertaining to a plurality of users | 202 |

| Computing a distance value for one or more criteria comprising (i) a first criteria that is indicative of a plurality of pairs of adjacent input text posts from the plurality of input text posts, (ii) a second criteria that is indicative of a time difference between at least two consecutive input text posts, and (iii) a third criteria that is indicative of one or more users from the plurality of users | 204 |

| Assigning a weightage to each distance value computed for the one or more criteria | 206 |

| Computing a weighted sum based on the assigned weightage | 208 |

| Generating based on the one or more criteria, using a corresponding distance value obtained from the weighted sum, a segmented interactive session text from the plurality of input text posts | 210 |

| Updating the distance value associated with each of the two or more adjacent input text posts, the time difference and the one or more users | 212 |

**FIG. 2**

U21PD486R says -=*[1471421519.000514]-=*::: How do I choose the version of minikube to be installed?

U21PD486R says -=*[1471421577.000515]-=*::: I found `minikube get-k8s-versions` but there doesnt seem to be an option for `start` to select a specific version

U0ARNNR9P says -=*[1471433661.000517]-=*::: is cadvisor running in localkube ?

U21PD486R says -=*[1471435539.000518]-=*::: Ive resolved my problem - I built minikube from the head of master, and start now has a `kubernetes-version` option.

U0ARNNR9P says -=*[1471455573.000519]-=*::: any thoughts on cadvisor. is that running in minikube ?

U0ARNNR9P says -=*[1471456263.000520]-=*::: How can I enable RBAC ?

U0U052HCM says -=*[1471457716.000521]-=*::: <@U0ARNNR9P>: i dont think you can because you need to enable the options in the api server startup. Ive been using CoreOS single node vagrant image for testing. works great.

U0ARNNR9P says -=*[1471458673.000522]-=*::: yeah, thats what it looks like, it does not seem setup by default.

U0ARNNR9P says -=*[1471469629.000523]-=*::: has anyone tried to use ThirdPartyResource as well in minikube ?

1)

Segmentation boundaries

**FIG. 3A**

EP 3 493 081 A1

U11H6PJUB says -=*[1471471422.000524]-=*::: TPR's aren't going to work right until a 1.4 based release.

U10AE1F99 says -=*[1471545708.000525]-=*::: <@U11H6PJUB> could you comment more on what we'd need to enable TBRs?

U11H6PJUB says -=*[1471545728.000526]-=*::: They're enabled, they just don't work in 1.3

U10AE1F99 says -=*[1471545746.000527]-=*::: ah thanks

U10AE1F99 says -=*[1471545753.000528]-=*::: we're working on a 1.4 alpha build now

U10AE1F99 says -=*[1471545757.000529]-=*::: hopefully they'll work there :slightly_smiling_face:

U11H6PJUB says -=*[1471545851.000530]-=*::: <https://github.com/kubernetes/kubernetes/pull/28414> that's the latest fix. I think it fully works now.

U11H6PJUB says -=*[1471545875.000532]-=*::: Was very disappointing, even for a 'beta' resource.

U10AE1F99 says -=*[1471546243.000533]-=*::: :disappointed:

U11H6PJUB says -=*[1471547225.000534]-=*::: Sorry, didn't mean to hurt any feelings.

U10AE1F99 says -=*[1471554312.000535]-=*::: haha none hurt

2) ───────────────────────────────────────────────────────────────────────────

Segmentation boundaries

**FIG. 3B**

U1V8KAALC says -=*[1471628397.000537]-=*::: Hi, can anyone confirm my theory. I'm running Postgres locally on my machine, and using the virtual box host IP (10.0.2.2) to have apps running in minikube access it. I'm seeing large network latency/response times from API calls to these services and I'm wondering if it's the fact that I'm calling out to Postgres outside of the minikube VM

U1V8KAALC says -=*[1471628430.000538]-=*::: Working on a local dev story for my team

Segmentation boundaries

3)

U0KRS6P0U says -=*[1471948813.000545]-=*::: Hi guys. I'm trying to use minikube on my laptop. If I try to build it simply clonig git repo and using *make* I get e lot of errors. I try to set GOPATH environment variable with no success. If I try to use instruction showed in "Adding a new Dependency" in <https://github.com/kubernetes/minikube> I am able to stget e minikube command ...

U0KRS6P0U says -=*[1471948852.000547]-=*::: but if I try to run "minikube start" I have no apiserver running so I not able to anything

U0KRS6P0U says -=*[1471948992.000548]-=*::: have someone a suggestion?

U0ACRBLSV says -=*[1471961211.000549]-=*::: Do you want to build it, or just run it?

U0ACRBLSV says -=*[1471961263.000550]-=*::: If the latter, Id suggest the binary builds, or homebrew if on a mac

U0KRS6P0U says -=*[1471961647.000551]-=*::: Simply run it ... but if I can build it it's a must :smile:

**FIG. 3C**

EP 3 493 081 A1

U21PD486R says -=*[1471421519.000514]-=*::: How do I choose the version of minikube to be installed?

U21PD486R says -=*[1471421577.000515]-=*::: I found `minikube get-k8s-versions` but there doesnt seem to be an option for `start` to select a specific version

U0ARNNR9P says -=*[1471433661.000517]-=*::: is cadvisor running in localkube ?

U21PD486R says -=*[1471435539.000518]-=*::: Ive resolved my problem - I built minikube from the head of master, and start now has a `kubernetes-version` option.

U0ARNNR9P says -=*[1471455573.000519]-=*::: any thoughts on cadvisor. is that running in minikube ?

U0ARNNR9P says -=*[1471456263.000520]-=*::: How can I enable RBAC ?

U0U052HCM says -=*[1471457716.000521]-=*::: <@U0ARNNR9P>: i dont think you can because you need to enable the options in the api server startup. Ive been using CoreOS single node vagrant image for testing. works great.

U0ARNNR9P says -=*[1471458673.000522]-=*::: yeah, thats what it looks like, it does not seem setup by default.

U0ARNNR9P says -=*[1471469629.000523]-=*::: has anyone tried to use ThirdPartyResource as well in minikube ?

U11H6PJUB says -=*[1471471422.000524]-=*::: TPR's aren't going to work right until a 1.4 based release.

Average time    IB: TimeDiff

IB: Text+TimeDiff+Poster

**FIG. 3D**

U10AE1F99 says -=*[1471545708.000525]-=*::: <@U11H6PJUB> could you comment more on what we'd need to enable TBRs?

U11H6PJUB says -=*[1471545728.000526]-=*::: They're enabled, they just don't work in 1.3

U10AE1F99 says -=*[1471545746.000527]-=*::: ah thanks

U10AE1F99 says -=*[1471545753.000528]-=*::: we're working on a 1.4 alpha build now

U10AE1F99 says -=*[1471545757.000529]-=*::: hopefully they'll work there :slightly_smiling_face:

U11H6PJUB says -=*[1471545851.000530]-=*::: <https://github.com/kubernetes/kubernetes/pull/28414> that's the latest fix. I think it fully works now.

U11H6PJUB says -=*[1471545875.000532]-=*::: Was very disappointing, even for a 'beta' resource.

U10AE1F99 says -=*[1471546243.000533]-=*::: :disappointed:

U11H6PJUB says -=*[1471547225.000534]-=*::: Sorry, didn't mean to hurt any feelings.

U10AE1F99 says -=*[1471554312.000535]-=*::: haha none hurt

Average time

IB: Text+TimeDiff+Poster

**FIG. 3E**

EP 3 493 081 A1

U1V8KAALC says -=*[1471628397.000537]-=*::: Hi, can anyone confirm my theory. I'm running Postgres locally on my machine, and using the virtual box host IP (10.0.2.2) to have apps running in minikube access it. I'm seeing large network latency/response times from API calls to these services and I'm wondering if it's the fact that I'm calling out to Postgres outside of the minikube VM

IB: TimeDiff    IB: Text+ TimeDiff+Poster

U1V8KAALC says -=*[1471628430.000538]-=*::: Working on a local dev story for my team

U0KRS6P0U says -=*[1471948813.000545]-=*::: Hi guys. I'm trying to use minikube on my laptop. If I try to build it simply clonig git repo and using *make* I get e lot of errors. I try to set GOPATH environment variable with no success. If I try to use instruction showed in "Adding a new Dependency" in <https://github.com/kubernetes/minikube> I am able to stget e minikube command ...

U0KRS6P0U says -=*[1471948852.000547]-=*::: but if I try to run "minikube start" I have no apiserver running so I not able to anything

U0KRS6P0U says -=*[1471948992.000548]-=*::: have someone a suggestion?

U0ACRBLSV says -=*[1471961211.000549]-=*::: Do you want to build it, or just run it?

U0ACRBLSV says -=*[1471961263.000550]-=*::: If the latter, Id suggest the binary builds, or homebrew if on a mac

U0KRS6P0U says -=*[1471961647.000551]-=*::: Simply run it ... but if I can build it it's a must :smile:

Average time

**FIG. 3F**

EP 3 493 081 A1

**FIG. 4**

**FIG. 5**

**FIG. 6**

**FIG. 7**

Europäisches
Patentamt

European
Patent Office

Office européen
des brevets

# EUROPEAN SEARCH REPORT

Application Number

EP 18 20 6188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHA ELSNER ET AL: "Disentangling chat", COMPUTATIONAL LINGUISTICS, M I T PRESS, US, vol. 36, no. 3, 1 September 2010 (2010-09-01), pages 389-409, XP058177049, ISSN: 0891-2017, DOI: 10.1162/COLI_A_00003 * abstract * * Sections 1-5 * | 1-9 | INV. G06F17/27 G06F16/35 |
| A | LIDAN WANG ET AL: "Context-based message expansion for disentanglement of interleaved text conversations", SRWS '09 PROCEEDINGS OF HUMAN LANGUAGE TECHNOLOGIES: THE 2009 ANNUAL CONFERENCE OF THE NORTH AMERICAN CHAPTER OF THE ASSOCIATION FOR COMPUTATIONAL LINGUISTICS, COMPANION VOLUME: STUDENT RESEARCH WORKSHOP AND DOCTORAL CONSORTIUM, ACL, STROUDSBURG, PA, 31 May 2009 (2009-05-31), pages 200-208, XP058352155, ISBN: 978-1-932432-41-1 * abstract * * Sections 1 & 3 * | 1-9 | |
| A | WO 2016/040400 A1 (MICROSOFT TECHNOLOGY LICENSING LLC [US]) 17 March 2016 (2016-03-17) * abstract * * paragraphs [0016] - [0065] * | 1-9 | |

TECHNICAL FIELDS
SEARCHED (IPC)

G06F

-/--

The present search report has been drawn up for all claims

| Place of search | Date of completion of the search | Examiner |
|---|---|---|
| Berlin | 23 April 2019 | Woods, Justin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 18 20 6188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | UTHUS DAVID C ET AL: "Multiparticipant chat analysis: A survey", ARTIFICIAL INTELLIGENCE, ELSEVIER SCIENCE PUBLISHER B.V., AMSTERDAM, NL, vol. 199, 26 February 2013 (2013-02-26), pages 106-121, XP028562344, ISSN: 0004-3702, DOI: 10.1016/J.ARTINT.2013.02.004 * Section 4.3 * | 1-9 | |
| X,P | S Vishal ET AL: "Information Bottleneck Inspired Method For Chat Text Segmentation", Proceedings of the The 8th International Joint Conference on Natural Language Processing, 27 November 2017 (2017-11-27), pages 194-203, XP055579865, Taipei, Taiwan Retrieved from the Internet: URL:https://www.aclweb.org/anthology/I17-1020 [retrieved on 2019-04-10] * the whole document * | 1-9 | |

TECHNICAL FIELDS SEARCHED (IPC)

The present search report has been drawn up for all claims

| Place of search | Date of completion of the search | Examiner |
|---|---|---|
| Berlin | 23 April 2019 | Woods, Justin |

EPO FORM 1503 03.82 (P04C01)

## ANNEX TO THE EUROPEAN SEARCH REPORT
## ON EUROPEAN PATENT APPLICATION NO.

EP 18 20 6188

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2019

| Patent document cited in search report | Publication date | Patent family member(s) | Publication date |
|---|---|---|---|
| WO 2016040400 A1 | 17-03-2016 | US 2016070692 A1<br>WO 2016040400 A1 | 10-03-2016<br>17-03-2016 |

EPO FORM P0459

For more details about this annex : see Official Journal of the European Patent Office, No. 12/82

**EP 3 493 081 A1**

**Patent documents cited in the description**

- IN 201721042505